# EUROPÄISCHE PATENTANMELDUNG

(11) **EP 3 902 043 A1**
(43) Veröffentlichungstag der Anmeldung: **27.10.2021**
(21) Anmeldenummer: 21169912.9
(22) Anmeldetag: 22.04.2021
(51) Int. Cl.: H01M 8/04119, H01M 8/04291, H01M 8/04492, H01M 8/04828, H01M 8/04089, H01M 8/04111, H01M 8/249

(54) **VERTEILVORRICHTUNG FÜR EIN AUFFANGEN UND VERTEILEN VON PRODUKTWASSER**

(30) Priorität: 22.04.2020 AT 503472020
(71) Anmelder: AVL List GmbH, 8020 Graz (AT)
(72) Erfinder: Mair, Frank, DI, 8010 Graz (AT)
(74) Vertreter: Mathys & Squire

(57) **Zusammenfassung**

Die vorliegende Erfindung betrifft eine Verteilvorrichtung (10) für ein Auffangen von Produktwasser (PW) aus einem Anodenpfad, insbesondere einem Anodenabführabschnitt (122), eines Brennstoffzellensystems (100) und ein Verteilen an einen Kathodenabführabschnitt (142) des Brennstoffzellensystems (100), aufweisend einen Wasserabscheider (20) in fluidkommunizierender Verbindung mit dem Anodenpfad für ein Abscheiden des Produktwassers (PW) aus dem Anodenabgas mit einem Wasserauslass (22) für die Abgabe von abgeschiedenem Produktwasser (PW), weiter aufweisend eine Ventilvorrichtung (30) stromabwärts des Wasserauslasses (22) mit einem ersten Verteilauslass (32) für eine fluidkommunizierende Verbindung zu dem Kathodenabführabschnitt (142) stromaufwärts einer Befeuchtervorrichtung (130) und einem zweiten Verteilauslass (34) für eine fluidkommunizierende Verbindung zu dem Kathodenabführabschnitt (142) stromabwärts der Befeuchtervorrichtung (130), wobei die Ventilvorrichtung (30) wenigstens ein zwischen einer den ersten Verteilauslass (32) öffnenden ersten Verteilposition (VP1) und wenigstens einer den zweiten Verteilauslass (34) öffnenden zweiten Verteilposition (VP2) schaltbares Ventilmittel (36) aufweist.

## Beschreibung

Die vorliegende Erfindung betrifft eine Verteilvorrichtung zum Auffangen und Verteilen von Produktwasser in einem Brennstoffzellensystem, ein Brennstoffzellensystem mit einer solchen Verteilvorrichtung sowie ein Verfahren für eine Kontrolle der Feuchtigkeit in einem Brennstoffzellensystem.

Es ist bekannt, dass in Brennstoffzellensystemen die Feuchtigkeit eine wesentliche Rolle bei der Kontrolle spielt. Dabei handelt es sich insbesondere darum, dass die empfindlichen Membranen zwischen der Anodenseite und der Kathodenseite in einem Brennstoffzellenstapel eine definierte Feuchtigkeit nicht unterschreiten sollen. Gleichzeitig darf die Feuchtigkeit innerhalb des Brennstoffzellenstapels jedoch auch einen bestimmten Maximalwert nicht überschreiten, um ein unerwünscht hohes Maß an Kondenswasser im Brennstoffzellenstapel zu vermeiden.

Bekannte Brennstoffzellenstapel erlauben daher die Kontrolle der Feuchtigkeit innerhalb des Brennstoffzellenstapels, insbesondere durch die Kontrolle der Befeuchtung des Kathodenzuführgases. Kathodenzuführgas ist üblicherweise Luft, welche von außerhalb des Brennstoffzellenstapels angesaugt wird. Je nach Feuchtigkeitsbedarf ist es bei den bekannten Lösungen möglich dieses Kathodenzuführgas mit einer Befeuchtervorrichtung zu befeuchten. Diese Befeuchtervorrichtung ist üblicherweise so ausgestaltet, dass Feuchte aus dem Kathodenabgas an das Kathodenzuführgas übergeben werden kann. Für die Kontrolle der Feuchtigkeit im Kathodenzuführgas ist bei den bekannten Lösungen ein Bypasspfad vorgesehen, welcher es erlaubt das Kathodenabgas an der Befeuchtervorrichtung vorbeizuführen. Somit ist bei den bekannten Lösungen möglich Feuchtigkeit aus dem Kathodenabgas entweder an der Befeuchtervorrichtung und damit am Kathodenzuführgas vorbeizuführen oder aber in die Befeuchtervorrichtung hinein und damit dem Kathodenzuführgas zuzuführen. Wird also eine erhöhte Feuchtigkeit im Kathodenzuführgas gewünscht, kann bei den bekannten Lösungen der Bypasspfad geschlossen werden. Wird keine erhöhte Feuchtigkeit im Kathodenzuführgas benötigt, erfolgt ein Öffnen des Bypasspfades und auf diese Weise eine Reduktion der Befeuchtung in der Befeuchtervorrichtung.

Nachteilig bei den bekannten Lösungen ist insbesondere, dass ein hoher konstruktiver Aufwand notwendig ist, um den Bypassabschnitt sowie ein zugehöriges Bypassventil in diesem Bypassabschnitt parallel an der Befeuchtervorrichtung vorzusehen. Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Kontrollierbarkeit der Befeuchtung in einem Brennstoffzellenstapel zu gewährleisten.

Die voranstehende Aufgabe wird gelöst durch eine Verteilvorrichtung mit den Merkmalen des Anspruchs 1, ein Brennstoffzellensystem mit den Merkmalen des Anspruchs 8 sowie ein Verfahren mit den Merkmalen des Anspruchs 11. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Verteilvorrichtung beschrieben sind, selbstverständlich auch im Zusammenhang mit dem erfindungsgemäßen Brennstoffzellensystem sowie dem erfindungsgemäßen Verfahren und jeweils umgekehrt, sodass bezüglich der Offenbarung zu den einzelnen Erfindungsaspekten stets wechselseitig Bezug genommen wird beziehungsweise werden kann.

Erfindungsgemäß ist eine Verteilvorrichtung zum Auffangen von Produktwasser aus einem Anodenpfad, insbesondere aus einem Anodenabführabschnitt, eines Brennstoffzellensystems ausgestattet. Das aufgefangene Produktwasser wird anschließend einem Kathodenabführabschnitt des Brennstoffzellensystems zugeführt beziehungsweise auf diesen Kathodenabführabschnitt verteilt. Für diese Funktionalität weist die Verteilvorrichtung einen Wasserabscheider auf, welcher in fluidkommunizierender Verbindung mit dem Anodenpfad des Brennstoffzellensystems für ein Abscheiden des Produktwassers aus dem Anodenabgas ausgebildet ist. Dieser Wasserabscheider ist mit einem Wasserauslass ausgestaltet für die Abgabe von abgeschiedenem Produktwasser. Produktwasser, welches aus dem Wasserauslass austritt, wird weitergeführt an eine Ventilvorrichtung, welche fluidkommunizierend mit dem Wasserauslass verbunden ist. Das abgeführte Produktwasser wird also über den Wasserauslass in die Ventilvorrichtung stromabwärts des Wasserauslasses eingebracht, und dort auf einen ersten Verteilauslass und/oder auf einen zweiten Verteilauslass verteilt. Der erste Verteilauslass steht dabei in fluidkommunizierender Verbindung mit dem Kathodenabführabschnitt des Brennstoffzellensystems stromaufwärts einer Befeuchtervorrichtung. Der zweite Verteilauslass steht ebenfalls in fluidkommunizierender Verbindung mit dem Kathodenabführabschnitt des Brennstoffzellensystems, jedoch stromabwärts der Befeuchtervorrichtung. Die Ventilvorrichtung ist dabei mit zumindest einem schaltbaren Ventilmittel ausgestattet, welches zwischen einer ersten Verteilposition und einer zweiten Verteilposition schaltbar ist. In der ersten Verteilposition öffnet sich eine fluidkommunizierende Verbindung zum ersten Verteilauslass und in der zweiten Verteilposition öffnet sich eine fluidkommunizierende Verbindung zum zweiten Verteilauslass.

Basierend auf der voranstehenden Erläuterung der technischen Funktionalität wird es nun möglich, mit der Verteilvorrichtung eine aktive Verteilung von abgeschiedenem Produktwasser aus dem Anodenabführabschnitt zur Verfügung zu stellen. Bei dem Betrieb eines Brennstoffzellensystems entsteht Kondenswasser, welches unter anderem auf der Anodenseite und dort im Anodenabgas enthalten ist. In der Verteilvorrichtung ist daher ein Wasserabscheider vorgesehen, welcher in der Lage ist das Kondenswasser aus dem Anodenabgas im Anodenpfad abzuscheiden. Dabei können die Verteilvorrichtung und insbesondere der Wasserabscheider zum Beispiel in dem Anodenabführabschnitt angeordnet sein. Jedoch ist es grundsätzlich auch denkbar, dass das Brennstoffzellensystem über eine Rezirkulationsfunktionalität und daher einen Rezirkulationsabschnitt für das Anodenabgas verfügt. Eine Anordnung des Wasserabscheiders ist daher auch in einem solchen Rezirkulationsabschnitt oder sogar im Anodenzuführabschnitt stromabwärts der Verbindung zu einem solchen Rezirkulationsabschnitt vorsehbar. In all diesen Fällen wird es möglich, das Anodenabgas direkt oder ein rezirkuliertes Anodenabgas dem Wasserabscheider zuzuführen und Kondenswasser als Produktwasser abzutrennen.

Erfindungsgemäß wird es nun möglich, dieses abgeschiedene Produktwasser innerhalb des Brennstoffzellensystems weiter zu verwenden. Mit Hilfe der Verteilvorrichtung und insbesondere mit Hilfe der Ventilvorrichtung ist dabei eine schaltbare Verwendung möglich. So wird es möglich, dass beim Schalten des Ventilmittels in die erste Verteilposition eine fluidkommunizierende Verbindung zwischen dem Wasserabscheider und dem Kathodenabführabschnitt zur Verfügung gestellt wird. Produktwasser wird auf diese Weise in den Kathodenabführabschnitt eingebracht und zwar über den ersten Verteilauslass stromaufwärts des Befeuchters. Das Kathodenabgas im Kathodenabführabschnitt wird also mit der Feuchtigkeit des Produktwassers zusätzlich beladen, bevor es die Befeuchtervorrichtung durchläuft. Mit anderen Worten wird die Feuchte des Kathodenabgases gesteigert bevor das Kathodenabgas mit der gesteigerten Feuchte stromabwärts dieser Verbindungsstelle anschließend in die Befeuchtervorrichtung eindringt. Dies führt dazu, dass Kathodenabgas mit gesteigerter Feuchte auch eine gesteigerte Befeuchtungsfunktionalität für das Kathodenzuführgas ausüben kann. Mit anderen Worten wird auf diese Weise eine größere Menge an Feuchtigkeit an das Kathodenzuführgas abgegeben und auf diese Weise die Feuchtigkeit des Kathodenzuführgases erhöht. In der ersten Verteilposition dient also die Verteilvorrichtung dazu, die Befeuchtung des Kathodenzuführgases zu verstärken.

Wird keine Verstärkung der Befeuchtung des Kathodenzuführgases benötigt, so ist es möglich über das Ventilmittel ein Umstellen in die zweite Verteilposition durchzuführen. In dieser zweiten Verteilposition wird das Produktwasser nun zwar ebenfalls wieder dem Kathodenabführabschnitt über den zweiten Verteilauslass zugeführt, jedoch stromabwärts der Befeuchtervorrichtung. Das Kathodenabgas, welches über den Kathodenabführabschnitt in die Befeuchtervorrichtung eindringt, weist also keine zusätzliche Feuchte aus dem Produktwasser beziehungsweise der Verteilvorrichtung auf. Vielmehr wird das abgeschiedene Produktwasser erstmals stromabwärts und damit der Befeuchtervorrichtung nachgelagert dem Kathodenabgas zugeführt und kann gemeinsam mit dem Kathodenabgas das Brennstoffzellensystem verlassen. Die zugeführte Feuchte des Produktwassers in dem Kathodenabführgas hat also keine zusätzliche Befeuchtungswirkung in der Befeuchtervorrichtung, wenn sich das Ventilmittel in der zweiten Verteilposition befindet. In der zweiten Verteilposition findet also keine zusätzliche Befeuchtung des Kathodenzuführgases statt.

Basierend auf der voranstehenden Erläuterung wird deutlich, dass nun durch die Verteilvorrichtung das Produktwasser verteilt werden kann und auf diese Weise eine Schaltmöglichkeit besteht zwischen einem zusätzlichen Befeuchten des Kathodenzuführgases in der ersten Verteilposition und einem Unterlassen einer zusätzlichen Befeuchtung des Kathodenzuführgases in der zweiten Verteilposition.

Wie ebenfalls aus der Erläuterung der Funktionalität ersichtlich ist, kann diese Schaltbarkeit eine Kontrolle der zusätzlichen Befeuchtung des Kathodenzuführgases erlauben ohne das Einfluss auf einen möglichen Bypass der Befeuchtervorrichtung genommen werden muss. Dies steigert zum einen die Kontrollspanne, also die Möglichkeit in quantitativer Weise Einfluss auf die Feuchte des Kathodenzuführgases zu nehmen. Zum anderen wird es auf diese Weise möglich sich gänzlich auf diese Kontrollmöglichkeit einzuschränken und eine konstruktive Ausgestaltung eines Bypasspfades vollständig zu vermeiden. Damit wird das Gesamtsystem der Befeuchtervorrichtung und damit das Brennstoffzellensystem kostengünstiger und einfacher sowie kompakter ausgestaltbar. Nicht zuletzt wird durch die Erhöhung der Befeuchtungsfähigkeit mit Hilfe des aufgefangenen Produktwassers auch eine kleinere Ausgestaltung der Befeuchtervorrichtung selbst möglich, sodass hier durch die erhöhte Kontrollfunktionalität in quantitativer Weise eine weitere Kompaktheit beziehungsweise eine Reduktion der Größe der Befeuchtervorrichtung erzielbar wird.

Es ist vorteilhaft, wenn bei einer erfindungsgemäßen Verteilvorrichtung das Ventilmittel zusätzlich in eine Sperrposition schaltbar ist, in welcher der erste Verteilauslass und der zweite Verteilauslass, insbesondere alle Verteilauslässe, gesperrt sind. Grundsätzlich ist es im Rahmen der vorliegenden Erfindung denkbar, dass auch ein dritter, vierter oder eine Vielzahl weiterer Verteilauslässe mit entsprechend dritten, vierten oder weiteren Verteilpositionen der Ventilvorrichtung vorgesehen sind. Jedoch reicht es für die erfindungsgemäße Funktionalität grundsätzlich aus, wenn die beschriebenen zwei Verteilauslässe ausgebildet sind. Für den Fall, das kein Produktwasser abgeschieden wird, oder aber, wenn in einem später noch erläuterten Sammelbehälter Produktwasser aufgefangen werden soll, kann es Vorteile mit sich bringen, wenn keiner der Verteilauslässe mit Produktwasser versorgt wird. Um in einem solchen Fall eine Schaltbarkeit zu gewährleisten, kann das Ventilmittel eine dritte Position in Form der Sperrposition aufweisen, in welchem jegliche fluidkommunizierende Kommunikation zu allen Verteilauslässen unterbunden wird. Auf diese Weise wird es also möglich, Produktwasser in einem stromaufwärts des Ventilmittels angeordneten Sammelbehälters aufzufangen oder aber abgeschiedenes Produktwasser nicht weiter zu verteilen. Bevorzugt ist jedoch die Kombination mit dem später noch erläuterten Sammelbehälter, welcher insbesondere eine zeitversetzte Befeuchtung des Kathodenzuführgases ermöglicht.

Vorteile bringt es weiter mit sich, wenn bei einer erfindungsgemäßen Verteilvorrichtung stromabwärts des Wasserauslasses und stromaufwärts der Ventilvorrichtung ein Sammelbehälter für abgeschiedenes Produktwasser angeordnet ist. Ein solcher Sammelbehälter kann auch als Pufferspeicher bezeichnet werden, welcher die Verteilfunktionalität von der Abscheidefunktionalität zeitlich und hinsichtlich des abgeschiedenen beziehungsweise verteilten Volumens entkoppelt. So ist es üblich, dass die Menge beziehungsweise das Volumen an abzuscheidendem Produktwasser nicht zwingend korreliert mit der zu diesem Zeitpunkt notwendigen Menge an Feuchtigkeit in der Befeuchtervorrichtung. Der Sammelbehälter erlaubt es nun kontinuierlich oder im Wesentlichen kontinuierlich eine Abscheidefunktionalität zur Verfügung zu stellen, also im Anodenabgas enthaltenes Produktwasser in flüssiger Form abzuscheiden, um einen Anodenbereich nicht zu fluten. Der Sammelbehälter dient als Auffangmöglichkeit und damit als Pufferspeicher. In gleicher Weise kann aus diesem Pufferspeicher auch zu vorzugsweise jedem Zeitpunkt die Befeuchterfunktionalität verstärkt werden, wenn eine zusätzliche Befeuchtung von Kathodenzuführgas notwendig oder gewünscht ist. In dem Sammelbehälter gelagertes Produktwasser kann also so auch dann über den ersten Verteilauslass in der ersten Verteilposition zur zusätzlichen Befeuchtung genutzt werden, wenn im Anodenabgas zu diesem Zeitpunkt kein oder nur wenig Produktwasser zum Abscheiden vorhanden ist. Insbesondere ist eine Verwendung eines solchen Sammelbehälters mit einem Ventilmittel mit zusätzlicher Sperrposition kombiniert, um die voranstehend beschriebene zeitversetzte Funktionalität des Abscheidens und des Verteilens aufrechtzuerhalten.

Ebenfalls Vorteile kann es mit sich bringen, wenn bei einer erfindungsgemäßen Verteilvorrichtung das Ventilmittel für die erste Verteilposition und/oder für die zweite Verteilposition quantitativ schaltend ausgebildet ist. Eine solche quantitativ schaltende Ausgestaltung führt dazu, dass in der Verteilposition der jeweilige Verteilauslass nicht nur qualitativ geöffnet und geschlossen werden kann, sondern vielmehr auch der tatsächliche Durchlassvolumenstrom, also die Menge an Produktwasser pro Zeiteinheit, welche in dem jeweiligen Verteilauslass eingebracht werden soll, kontrollierbar ist. Dies erlaubt es neben einem einfachen Umschalten zwischen dem ersten Verteilauslass und dem zweiten Verteilauslass auch ein quantitatives Kontrollieren der Menge des Produktwassers zu erlauben, welches in den jeweiligen Verteilauslass eingebracht wird. Neben einem grundsätzlichen Ein- und Ausschalten der zusätzlichen Befeuchtungsqualität kann auf diese Weise in quantitativer Weise die zusätzliche Befeuchtungsmenge über diese quantitative Schaltung insbesondere in der ersten Verteilposition verbessert werden. Dabei ist es unerheblich, ob es sich bei dem Ventilmittel um ein gemeinsames Ventilmittel für alle Verteilauslässe oder um Ventilteilelemente handelt, welche separat voneinander quantitativ schaltbar sind.

Vorteile sind ebenfalls erzielbar, wenn bei einer erfindungsgemäßen Verteilvorrichtung das Ventilmittel für die erste Verteilposition und/oder für die zweite Verteilposition wenigstens abschnittsweise qualitativ schaltend ausgebildet ist. Dabei kann zum Beispiel ein Mehrwegventil eingesetzt werden, welches ausschließlich die erste Verteilposition oder ausschließlich die zweite Verteilposition einnehmen kann. Somit wird die jeweilige Verteilposition entweder den zugehörigen Verteilauslass vollständig öffnen oder vollständig schließen. Dies ist selbstverständlich mit einer quantitativen Schaltmöglichkeit gemäß dem voranstehenden Absatz im Rahmen der vorliegenden Erfindung kombinierbar. Grundsätzlich erlaubt die qualitative Schaltung eine deutlich einfachere und kostengünstige Kontrollierbarkeit der Verteilfunktionalität und damit der Befeuchtungskontrolle.

Vorteile bringt es weiter mit sich, wenn bei einer erfindungsgemäßen Verteilvorrichtung stromabwärts des Wasserauslasses eine Pumpvorrichtung für ein Fördern des abgeschiedenen Produktwassers angeordnet ist. Eine solche Pumpvorrichtung kann zum Beispiel stromaufwärts von einem Sammelbehälter angeordnet sein und das abgeschiedene Produktwasser in den Sammelbehälter einbringen. Auch eine Anordnung nach einem solchen Sammelbehälter ist denkbar, um mit Hilfe der Pumpvorrichtung Produktwasser aus dem Sammelbehälter heraus zu fördern. In gleicher Weise kann die Pumpvorrichtung vor der Ventilvorrichtung und/oder nach der Ventilvorrichtung zum Beispiel im jeweiligen Verteilauslass angeordnet sein. Die Verwendung einer Pumpvorrichtung erlaubt es insbesondere in Bezug zur Schwerkraftrichtung eine größere Freiheit im Einsatz des Brennstoffzellensystems und insbesondere im Einsatz der Verteilvorrichtung zu gewährleisten. Auch ist es denkbar, dass die Pumpvorrichtung anstelle eines Sammelbehälters, wie er weiter oben erläutert worden ist, eingesetzt wird.

Weitere Vorteile bringt es mit sich, wenn bei einer erfindungsgemäßen Verteilvorrichtung der erste Verteilauslass eine Verteildüse in den Kathodenabführabschnitt aufweist für ein Einsprühen des Produktwassers in den Kathodenabführabschnitt stromaufwärts der Befeuchtervorrichtung. Eine solche Verteildüse kann auch als Atomisierdüse bezeichnet werden und dient dazu aus einem flüssigen Produktwasserstrom eine feinverteilte Tröpfchenwolke zu bilden, welche in das Kathodenabgas in der Befeuchtervorrichtung beziehungsweise im Kathodenabführabschnitt hineingesprüht wird. Das Feinverteilen und/oder Aufteilen in einzelne Tröpfchen führt dazu, dass die Befeuchtung des Kathodenabführgases verstärkt und die Übergabemöglichkeit dieser zusätzlichen Feuchtigkeit an das Kathodenzuführgas in der Befeuchtervorrichtung weiter verbessert wird.

Ebenfalls Gegenstand der vorliegenden Erfindung ist ein Brennstoffzellensystem, aufweisend:
- zumindest einen Brennstoffzellenstapel mit einem Anodenabschnitt und einem Kathodenabschnitt,
- einen Anodenzuführabschnitt zum Zuführen von Anodenzuführgas zu dem Anodenabschnitt,
- einen Kathodenzuführabschnitt zum Zuführen von Kathodenzuführgas zum Kathodenabschnitt,
- einen Anodenabführabschnitt zum Abführen von Anodenabgas,
- einen Kathodenabführabschnitt zum Abführen von Kathodenabgas,
- eine Befeuchtervorrichtung im Kathodenzuführabschnitt zum Befeuchten von Kathodenzuführgas.

Im Anodenpfad, insbesondere im Anodenabführabschnitt, ist dabei eine erfindungsgemäße Verteilvorrichtung angebracht. Damit bringt ein erfindungsgemäßes Brennstoffzellensystem die gleichen Vorteile mit sich, wie sie ausführlich mit Bezug auf eine erfindungsgemäße Verteilvorrichtung erläutert worden sind. Die Befeuchtervorrichtung ist dabei vorzugsweise in Korrelation zum Kathodenabführabschnitt angeordnet, sodass der Kathodenabführabschnitt zur Befeuchtung des Kathodenzuführgases durch die Befeuchtervorrichtung hindurchgeführt wird. Auch ist es grundsätzlich denkbar, einen Rezirkulationsabschnitt im Anodenpfad anzuordnen, welcher eine Rezirkulation von Anodenabgas über eine aktive (z.B.: Rezirkulationspumpe) oder passive (z.B.: Injektor/Ejektor) Rezirkulationsvorrichtung in den Anodenzuführabschnitt erlaubt. Alternativ oder zusätzlich ist es auch denkbar, wenn eine erfindungsgemäße Verteilvorrichtung auch im Kathodenpfad, insbesondere im Kathodenabführabschnitt, angeordnet ist. Dies erlaubt es, anfallendes flüssiges Produktwasser, vorzugsweise stromabwärts einer Befeuchtervorrichtung, abzuscheiden und über die Verteilvorrichtung einem Verbraucher zuzuführen.

Vorteile bringt es mit sich, wenn bei einem erfindungsgemäßen Brennstoffzellensystem die Befeuchtervorrichtung frei von einem Bypasspfad ausgebildet ist. Wie bereits eingangs erläutert worden ist, kann mit einer erfindungsgemäßen Verteilvorrichtung mit großer Bandbreite eine Kontrolle der Zusatzbefeuchtung von Kathodenzuführgas in der Befeuchtervorrichtung gewährleistet werden. Durch diese große Kontrollbreite wird es nun möglich auf eine separate Kontrollfunktionalität über einen Bypassabschnitt sogar gänzlich zu verzichten. Ein erfindungsgemäßes Brennstoffzellensystem benötigt daher keinen Bypasspfad mehr, sodass die Befeuchtervorrichtung für eine erhöhte Kompaktheit und eine kostengünstigere und einfachere Ausgestaltung frei von einem solchen Bypasspfad ausgebildet werden kann.

Ebenfalls Vorteile bringt es mit sich, wenn bei einem erfindungsgemäßen Brennstoffzellensystem eine zusätzliche Verteilvorrichtung in dem Kathodenpfad angeordnet ist. Eine solche zusätzliche Verteilvorrichtung erlaubt, wie bereits angedeutet, eine weitere Verbesserung der Befeuchtungskontrolle. So kann beispielsweise ein gemeinsamer Sammelbehälter von allen Verteilvorrichtungen eingesetzt werden, um abgeschiedenes Produktwasser, nicht nur aus dem Anodenabgas, sondern auch aus dem Kathodenabgas, abzuscheiden und aufzufangen.

Ein weiterer Gegenstand der vorliegenden Erfindung ist ein Verfahren für eine Kontrolle der Feuchtigkeit eines Kathodenzuführgases mit einem erfindungsgemäßen Brennstoffzellensystem aufweisend die folgenden Schritte:
- Bestimmen eines Feuchtigkeitsparameters des Kathodenzuführgases,
- Schalten des Ventilmittels der Ventilvorrichtung auf Basis des bestimmten Feuchtigkeitsparameters.

Ein erfindungsgemäßes Verfahren bringt die gleichen Vorteile mit sich, wie sie ausführlich mit Bezug auf ein erfindungsgemäßes Brennstoffzellensystem sowie mit Bezug auf eine erfindungsgemäße Verteilvorrichtung erläutert worden sind. Die Bestimmung des Feuchtigkeitsparameters kann dabei in direkter, aber auch in indirekter Weise erfolgen. So kann beispielsweise die Feuchtigkeit des Kathodenzuführgases stromabwärts der Befeuchtervorrichtung im Kathodenzuführabschnitt direkt gemessen werden. Jedoch kann auch, zum Beispiel auf Basis des aktuellen Betriebspunktes des Brennstoffzellenstapels, eine indirekte Bestimmung eines solchen Feuchtigkeitsparameters erfolgen. Ziel bei dem erfindungsgemäßen Kontrollverfahren ist dabei eine definierte Feuchtigkeit der Membranen innerhalb des Brennstoffzellenstapels zwischen dem jeweiligen Anodenabschnitt und dem jeweiligen Kathodenabschnitt. Bevorzugt ist diese definierte Feuchtigkeit durch eine definierte Mindestfeuchtigkeit, eine definierte Maximalfeuchtigkeit und/oder einen definierten Feuchtigkeitskorridor für diese Membran vorgegeben.

Vorteile kann es weiter mit sich bringen, wenn bei einem erfindungsgemäßen Verfahren das Schalten des Ventilmittels schubweise und/oder periodisch erfolgt. Dies erlaubt es, dieses Ventilmittel besonders einfach und kostengünstig zu kontrollieren. Beispielsweise kann mit Hilfe einer Pulsweitenmodulation (PWM) ein schubweises und/oder periodisches Schalten des Ventilmittels erfolgen. Das periodische Umschalten zwischen der ersten Verteilposition und der zweiten Verteilposition kann zum Beispiel hinsichtlich der Schaltfrequenz und/oder hinsichtlich der Öffnungszeit beziehungsweise Verweilzeit in der jeweiligen Verteilposition kontrolliert werden. Bevorzugt ist ein solches schubweises und/oder periodisches Schalten mit einer Verteilvorrichtung kombiniert, welche den erläuterten Sammelbehälter aufweist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen schematisch:
- Fig. 1: eine Ausführungsform einer erfindungsgemäßen Verteilvorrichtung in zweiter Verteilposition,
- Fig. 2: die Ausführungsform der Figur 1 in erster Verteilposition,
- Fig. 3: eine weitere Ausführungsform einer erfindungsgemäßen Verteilvorrichtung in Sperrposition,
- Fig. 4: eine Ausführungsform eines erfindungsgemäßen Brennstoffzellensystems und
- Fig. 5: eine weitere Ausführungsform eines erfindungsgemäßen Brennstoffzellensystems.

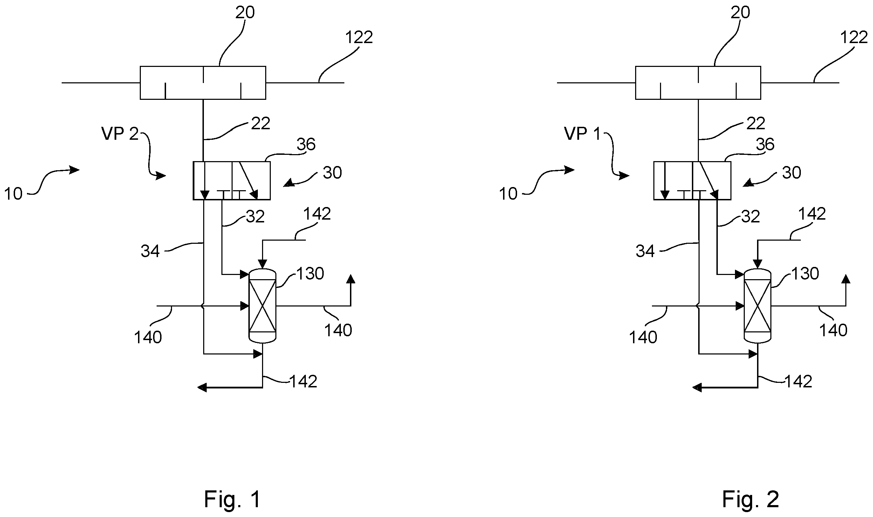

Die Figuren 1 und 2 zeigen schematisch eine Ausführungsform einer erfindungsgemäßen Verteilvorrichtung 10. Über einen Anodenabführabschnitt 122 kann Anodenabgas eines Brennstoffzellenstapels 110 geführt werden. Als Teil dieses Anodenabführabschnitts 122 ist ein Wasserabscheider 20 in denselben integriert, welcher es erlaubt Produktwasser PW aus dem Anodenabgas im Anodenabführabschnitt 122 abzuscheiden. Dieses abgeschiedene Produktwasser PW wird nun über den Wasserauslass 22 der Ventilvorrichtung 30 zugeführt. Die Ventilvorrichtung 30 ist in Figur 1 in der zweiten Verteilposition VP2 und in der Figur 2 in der ersten Verteilposition VP1 dargestellt. Diese beiden Verteilpositionen VP1 und VP2 für das Ventilmittel 36 der Ventilvorrichtung 30 unterscheiden sich darin, dass unterschiedliche Verteilpfade in Form von einem ersten Verteilauslass 32 und einem zweiten Verteilauslass 34 geöffnet beziehungsweise geschlossen werden.

Wird eine zusätzliche Feuchtigkeit im Kathodenzuführgas gewünscht, so wird eine zusätzliche Befeuchtung in der Befeuchtervorrichtung 130 benötigt. Kathodenzuführgas strömt dabei über den Kathodenzuführabschnitt 140 von links in die Befeuchtervorrichtung 130 hinein und rechts aus dieser wieder hinaus. Um die Befeuchtung durchzuführen wird zusätzlich quer zum Kathodenzuführgas Kathodenabgas über den Kathodenabführabschnitt 142 in die Befeuchtervorrichtung 130 hineingeführt, um Feuchtigkeit, welche das Kathodenabführgas trägt, über die Befeuchtervorrichtung 130 dem Kathodenzuführgas zuzuführen.

Für eine gewünschte verbesserte oder gesteigerte Feuchtigkeit des Kathodenzuführgases wird nun das Ventilmittel 36 in die erste Verteilposition VP1 gemäß der Figur 2 geschaltet. Produktwasser PW wird über den Wasserauslass 22 nun auf den ersten Verteilauslass 32 gelenkt und dort stromaufwärts der Befeuchtervorrichtung 130 dem Kathodenabgas im Kathodenabführabschnitt 142 zugeführt. Die Feuchtigkeitsbeladung des Kathodenabgases steigt damit stromaufwärts der Befeuchtervorrichtung 130, sodass das auf diese Weise feuchtere Kathodenabgas innerhalb der Befeuchtervorrichtung 130 eine verstärkte Befeuchtungsleistung für das Kathodenzuführgas im Kathodenzuführabschnitt 140 ausführen kann.

Wird keine zusätzliche Feuchtigkeit im Kathodenzuführgas benötigt, wird das Ventilmittel 36 gemäß der Figur 1 in die zweite Verteilposition VP2 geschaltet, sodass der erste Verteilauslass 32 gesperrt und der zweite Verteilanschluss 34 geöffnet wird. Das abgeschiedene Produktwasser PW aus dem Wasserauslass 22, wird nun nicht blockiert, sondern vielmehr weiter dem Kathodenabführabschnitt 142 zugeführt, jedoch stromabwärts der Befeuchtervorrichtung 130, sodass keine zusätzliche Befeuchtungswirkung in der Befeuchtervorrichtung 130 möglich ist. Ein Umschalten zwischen den beiden Verteilpositionen VP1 und VP2 erlaubt also ein Umschalten zwischen aktivierter zusätzlicher Befeuchtungsfunktionalität und deaktivierter zusätzlicher Befeuchtungsfunktionalität.

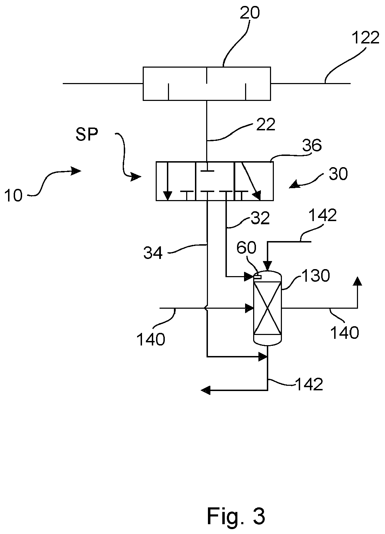

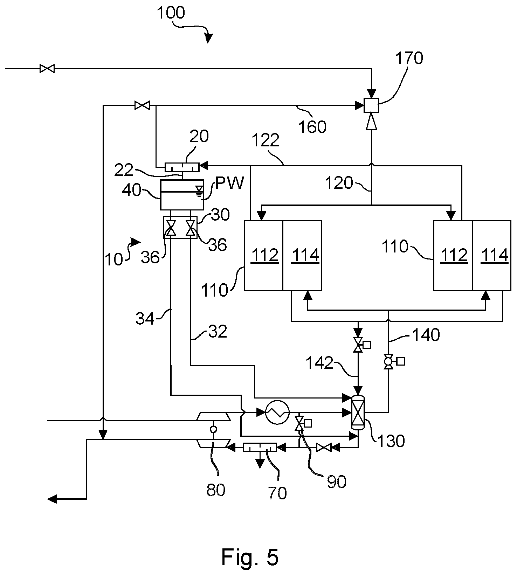

Figur 3 zeigt schematisch eine Weiterbildung der Verteilvorrichtung der Ausführungsform der Figuren 1 und 2. Das Ventilmittel 36 der Ventilvorrichtung 30 ist hier zusätzlich in die dargestellte Sperrposition SP bewegbar, in welcher keiner der beiden Verteilauslässe 32 und 34 bedient wird. Diese Schaltfunktionalität ist insbesondere kombiniert mit einem in der Figur 5 dargestellten Sammelbehälter 40 für Produktwasser PW und kann auf diese Weise ein periodisches oder schubweises Schalten der Ventilvorrichtung 30 unterstützen. Hier ist weiter eine Verteildüse 60 dargestellt, welche es erlaubt, das Produktwasser PW aus dem ersten Verteilauslass 32 tröpfchenweise fein in das Kathodenabgas des Kathodenabführabschnitts 142 zu verteilen. Dies erlaubt es, die zusätzliche Befeuchtungskapazität noch weiter zu steigern, wenn sich das Ventilmittel 36 in der ersten Verteilposition VP1 befindet

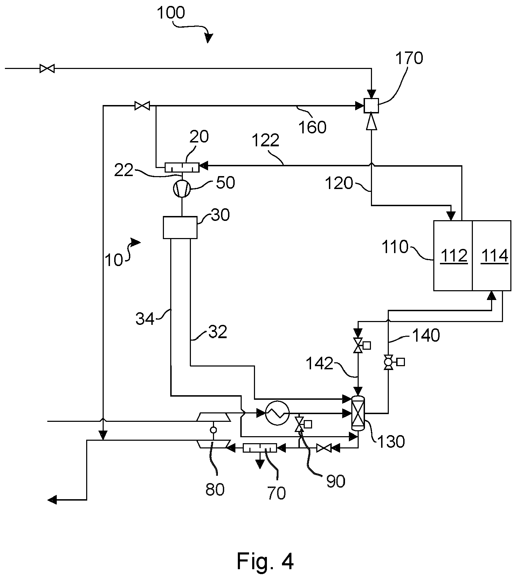

Die Figur 4 zeigt eine einfache Möglichkeit eines erfindungsgemäßen Brennstoffzellensystems 100. Der Kühlkreislauf ist zur vereinfachten Darstellung nicht dargestellt. Über den Anodenzuführabschnitt 120 wird Anodenzuführgas in den Anodenabschnitt 112 des Brennstoffzellenstapels 110 eingebracht. Verbrauchtes Anodenabgas wird über den Anodenabführabschnitt 122 abgeführt und läuft durch den Wasserabscheider 20. Neben einer Abfuhr über ein sogenanntes Purgeventil an die Umgebung und/oder in den Kathodenabführabschnitt kann auch eine Rezirkulation des Anodenabgases über die dargestellte passive Rezirkulationsvorrichtung, beispielsweise in Form einer Ejektorvorrichtung 170, erfolgen. Der Wasserabscheider 20 kann selbstverständlich auch in dem Rezirkulationsabschnitt 160 oder sogar in dem Anodenzuführabschnitt 120 stromabwärts der passiven Rezirkulationsvorrichtung hier in Form der Ejektorvorrichtung 170 angeordnet werden.

Bei der Ausführungsform der Figur 4 ist zusätzlich eine optionale Pumpvorrichtung 50 vorgesehen, welche ein aktives Fördern von Produktwasser PW von dem Wasserauslass 22 zur Ventilvorrichtung 30 ermöglicht. Bei dieser Ausgestaltung ist ebenfalls wieder wie beschrieben zu den Figuren 1 bis 4 ein Schalten der Ventilvorrichtung 30 auf den ersten Verteilauslass 32 und/oder den zweiten Verteilauslass 34 mit den entsprechenden Wirkungen möglich.

In der Figur 5 ist ein komplexeres Brennstoffzellensystem 100 mit zwei separaten Brennstoffzellenstapeln 110 dargestellt. Hier sind entsprechend auch aufgeteilte Anodenzuführabschnitte 120, Anodenabführabschnitte 122, Kathodenzuführabschnitte 140 und Kathodenabführschnitte 142 dargestellt. Die Befeuchtervorrichtung 130 ist hier ebenfalls wieder mit und ohne zusätzliche Befeuchtung betreibbar, durch das entsprechende Schalten der Ventilmittel 36 der Ventilvorrichtung 30. Bei dieser Ausführungsform ist darüber hinaus ein Sammelbehälter 40 für Produktwasser PW vorgesehen, um als Pufferspeicher zu dienen.

In den Brennstoffzellensystemen 100 gemäß Fig. 4 und 5 ist weiter eine Turbine 80 mit einem stromaufwärts davon angeordnetem weiteren Wasserabscheider 70 vorgesehen. Bei Brennstoffzellensystemen 100, welche eine Turbine 80 aufweisen, ist der weitere Wasserabscheider 70 stromaufwärts davon notwendig, um die Turbine 80 vor Wassertropfen zu schützen. Alternativ zum Wasserabscheider 70 kann auch ein Sammelbehälter mit einer Pumpe und/oder Verteilervorrichtung vorgesehen sein. Des weiteren ist ein Bypassventil 90 vorgesehen.

Die voranstehende Erläuterung der Ausführungsformen beschreibt die vorliegende Erfindung ausschließlich im Rahmen von Beispielen, selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Verteilvorrichtung
- 20: Wasserabscheider
- 22: Wasserauslass
- 30: Ventilvorrichtung
- 32: erster Verteilauslass
- 34: zweiter Verteilauslass
- 36: Ventilmittel
- 40: Sammelbehälter
- 50: Pumpvorrichtung
- 60: Verteildüse
- 70: weiterer Wasserabscheider
- 80: Turbine
- 90: Bypassventil

- 100: Brennstoffzellensystem
- 110: Brennstoffzellenstapel
- 112: Anodenabschnitt
- 114: Kathodenabschnitt
- 120: Anodenzuführabschnitt
- 122: Anodenabführabschnitt
- 130: Befeuchtervorrichtung
- 140: Kathodenzuführabschnitt
- 142: Kathodenabführabschnitt
- 160: Rezirkulationsabschnitt
- 170: Ejektorvorrichtung

- PW: Produktwasser
- VP1: erste Verteilposition
- VP2: zweite Verteilposition
- SP: Sperrposition

## Patentansprüche

1. Verteilvorrichtung (10) für ein Auffangen von Produktwasser (PW) aus einem Anodenpfad, insbesondere einem Anodenabführabschnitt (122), eines Brennstoffzellensystems (100) und ein Verteilen an einen Kathodenabführabschnitt (142) des Brennstoffzellensystems (100), aufweisend einen Wasserabscheider (20) in fluidkommunizierender Verbindung mit dem Anodenpfad für ein Abscheiden des Produktwassers (PW) aus dem Anodenabgas mit einem Wasserauslass (22) für die Abgabe von abgeschiedenem Produktwasser (PW), weiter aufweisend eine Ventilvorrichtung (30) stromabwärts des Wasserauslasses (22) mit einem ersten Verteilauslass (32) für eine fluidkommunizierende Verbindung zu dem Kathodenabführabschnitt (142) stromaufwärts einer Befeuchtervorrichtung (130) und einem zweiten Verteilauslass (34) für eine fluidkommunizierende Verbindung zu dem Kathodenabführabschnitt (142) stromabwärts der Befeuchtervorrichtung (130), **dadurch gekennzeichnet, dass** die Ventilvorrichtung (30) wenigstens ein zwischen einer den ersten Verteilauslass (32) öffnenden ersten Verteilposition (VP1) und wenigstens einer den zweiten Verteilauslass (34) öffnenden zweiten Verteilposition (VP2) schaltbares Ventilmittel (36) aufweist.

2. Verteilvorrichtung (10) nach Anspruch 1, **dadurch gekennzeichnet, dass** das Ventilmittel (36) zusätzlich in eine Sperrposition (SP) schaltbar ist, in welcher der erste Verteilauslass (32) und der zweite Verteilauslass (34), insbesondere alle Verteilauslässe (32, 34), gesperrt sind.

3. Verteilvorrichtung (10) nach einem der vorangehenden Ansprüche, **dadurch gekennzeichnet, dass** stromabwärts des Wasserauslasses (22) und stromaufwärts der Ventilvorrichtung (30) ein Sammelbehälter (40) für abgeschiedenes Produktwasser (PW) angeordnet ist.

4. Verteilvorrichtung (10) nach einem der vorangehenden Ansprüche, **dadurch gekennzeichnet, dass** das Ventilmittel (36) für die erste Verteilposition (VP1) und/oder für die zweite Verteilposition (VP2) quantitativ schaltend ausgebildet ist.

5. Verteilvorrichtung (10) nach einem der vorangehenden Ansprüche, **dadurch gekennzeichnet, dass** das Ventilmittel (36) für die erste Verteilposition (VP1) und/oder für die zweite Verteilposition (VP2) wenigstens abschnittsweise qualitativ schaltend ausgebildet ist.

6. Verteilvorrichtung (10) nach einem der vorangehenden Ansprüche, **dadurch gekennzeichnet, dass** stromabwärts des Wasserauslasses (22) eine Pumpvorrichtung (50) für ein Fördern des abgeschiedenen Produktwassers (PW) angeordnet ist.

7. Verteilvorrichtung (10) nach einem der vorangehenden Ansprüche, **dadurch gekennzeichnet, dass** der erste Verteilauslass (32) in den Kathodenabführabschnitt (142) eine Verteildüse (60) aufweist für ein Einsprühen des Produktwassers (PW) in den Kathodenabführabschnitt (142) stromaufwärts der Befeuchtervorrichtung (130).

8. Brennstoffzellensystem (100), aufweisend
- zumindest einen Brennstoffzellenstapel (110) mit einem Anodenabschnitt (112) und einem Kathodenabschnitt (114),
- einen Anodenzuführabschnitt (120) zum Zuführen von Anodenzuführgas zu dem Anodenabschnitt (112),
- einen Kathodenzuführabschnitt (140) zum Zuführen von Kathodenzuführgas zum Kathodenabschnitt (114),
- einen Anodenabführabschnitt (122) zum Abführen von Anodenabgas,
- einen Kathodenabführabschnitt (142) zum Abführen von Kathodenabgas,
- eine Befeuchtervorrichtung (130) im Kathodenzuführabschnitt (140) zum Befeuchten von Kathodenzuführgas,
wobei im Anodenpfad, insbesondere im Anodenabführabschnitt (122), eine Verteilvorrichtung (10) mit den Merkmalen eines der Ansprüche 1 bis 7 angeordnet ist.

9. Brennstoffzellensystem (100) nach Anspruch 8, **dadurch gekennzeichnet, dass** die Befeuchtervorrichtung (130) frei von einem Bypasspfad ausgebildet ist.

10. Brennstoffzellensystem (100) nach einem der Ansprüche 8 oder 9, **dadurch gekennzeichnet, dass** eine zusätzliche Verteilvorrichtung (10) in dem Kathodenpfad angeordnet ist.

11. Verfahren für eine Kontrolle der Feuchtigkeit eines Kathodenzuführgases mit einem Brennstoffzellensystem (100) mit den Merkmalen eines der Ansprüche 8 bis 10, aufweisend die folgenden Schritte:
- Bestimmen eines Feuchtigkeitsparameters des Kathodenzuführgases,
- Schalten des Ventilmittels (36) der Ventilvorrichtung (30) auf Basis des Bestimmten Feuchtigkeitsparameters.

12. Verfahren nach Anspruch 11, **dadurch gekennzeichnet, dass** das Schalten des Ventilmittels (36) schubweise und/oder periodisch erfolgt.
